# EUROPÄISCHE PATENTSCHRIFT

(11) **EP 3 699 497 B1**
(45) Veröffentlichungstag und Bekanntmachung des Hinweises auf die Patenterteilung: **23.06.2021**
(21) Anmeldenummer: 20155276.7
(22) Anmeldetag: 04.02.2020
(51) Int. Cl.: F24D 3/16, E04B 9/00, E04B 9/26, F24F 5/00, E04F 13/08, E04C 2/52, E04B 9/04, E04B 9/36

(54) **DECKENAUFBAU ZUM HEIZEN UND/ODER KÜHLEN EINES RAUMES**
CEILING STRUCTURE FOR HEATING AND / OR COOLING A ROOM
STRUCTURE DE PLAFOND PERMETTANT DE CHAUFFER ET/OU REFROIDIR UNE PIÈCE

(30) Priorität: 20.02.2019 AT 632019
(43) Veröffentlichungstag der Anmeldung: 26.08.2020
(73) Patentinhaber: Dualis AG, 9491 Ruggell (LI); Frick Burtscher Holz mit Technik GmbH, 6850 Dornbirn (AT)
(72) Erfinder: Zechmann, Egon, 9494 Schaan (LI); Frick, Christof, 6845 Hohenems (AT)
(74) Vertreter: Hofmann, Ralf U.

(56) Entgegenhaltungen:
- CH-A- 303 596
- DE-A1-102008 020 422
- DE-B- 1 055 790
- DE-U1- 9 315 709
- FR-A- 1 073 482
- FR-A- 1 259 982

## Beschreibung

Die vorliegende Erfindung betrifft einen Deckenaufbau zum Heizen und/oder Kühlen eines Raumes, wobei der Deckenaufbau längserstreckte Wärmeleitprofile, mit denen jeweils ein Abschnitt eines Wärmeträgerfluidrohrs thermisch in Verbindung steht, und, an den Wärmeleitprofilen befestigte, Verkleidungselemente aufweist, wobei ein jeweiliges Verkleidungselement eine, sich in Richtung der Längserstreckung des jeweiligen Wärmeleitprofils erstreckende, Holzleiste ist.

Deckenaufbauten der eingangs genannten Art werden zum Heizen und/oder Kühlen von Gebäuderäumen verwendet und sind in unterschiedlichen Varianten bekannt. In einer gängigen Ausführungsvariante werden die Wärmeleitprofile an einer Deckentragkonstruktion montiert und mittels Verkleidungselementen abgedeckt, um eine optisch ansprechende Deckenoberfläche bereitzustellen. Beispiele für Verkleidungselemente gängiger Deckenaufbauten sind, insbesondere gelochte, Gipskartonplatten oder Blechverkleidungen, die an den Wärmeleitprofilen befestigt sind und mit ihrer, dem Raum abgewandten, Rückseite an diesen anliegen.

Verkleidungselemente aus Gipskartonplatten werden häufig mittels Schrauben direkt mit den Wärmeleitprofilen verschraubt. Um eine einwandfreie Deckenoberfläche bereitzustellen werden die Schraubenköpfe in einem weiteren Arbeitsschritt vor Ort überspachtelt und übermalt. Bei Verkleidungselementen aus Blech ist es bekannt, diese in ähnlicher Weise wie Gipskartonplatten anzuschrauben oder, sofern die Verkleidungselemente magnetisierbar sind, diese mittels an den Wärmeleitprofilen befestigten Magneten mit den Wärmeleitprofilen zu verbinden. Weiters sind Ausführungen bekannt, bei denen die Blechverkleidungen mittels Klebstoff auf die Wärmeleitprofile aufgeklebt werden.

Obwohl die gestalterischen Möglichkeiten der genannten Verkleidungselemente vielfältig sind, haben diese auch Nachteile, beispielsweise hinsichtlich der akustischen Eigenschaften oder aus ökologischer Sicht. Um die Schallabsorptionsgrade zu erhöhen, sind häufig zusätzliche Akustikvliese an der Rückseite der Verkleidungselemente nötig. Bei Gipskartonplatten ist auch die Entsorgung bzw. das Recycling mit einem beträchtlichen Aufwand verbunden.

In der DE 10 2008 020 422 A1 ist ein Deckenaufbau mit längserstreckten Wärmeleitprofilen gemäß dem Oberbegriff von Anspruch 1 gezeigt, die auf ein, die Sichtseite bildendes, Trägerelement aufgebracht werden können. Als Beispiele für das Trägerelement sind Gips- und Zementplatten, Stahlblechkassetten sowie Holzvertäfelungen genannt. Die Verbindung mit dem Trägerelement erfolgt durch Kleben, Nieten oder Schweißen.

Aufgabe der Erfindung ist es, einen vorteilhaften Deckenaufbau der eingangs genannten Art bereitzustellen, der verbesserte, insbesondere ökologische und akustische, Eigenschaften aufweist.

Erfindungsgemäß gelingt dies mit einem Deckenaufbau nach Patentanspruch 1. Gemäß der Erfindung ist vorgesehen, dass die Holzleisten in Längsrichtung verlaufende Nuten und die Wärmeleitprofile in Richtung der Längserstreckung verlaufende, von einem Anlagesteg des Wärmeleitprofils abstehende, Befestigungsstege aufweisen, die zur Fixierung der jeweiligen Holzleiste auf dem jeweiligen Wärmeleitprofil, in die Nuten eingepresst sind.

Holzleisten, d.h. Leisten aus Holz, weisen aufgrund der spezifischen Materialeigenschaften von Holz viele vorteilhafte Eigenschaften auf. Holz, als nachwachsender Rohstoff, ist in reiner Form problemlos durch Kompostierung oder durch Verbrennung, bei gleichzeitiger Energiegewinnung, entsorgbar. Auch in Hinblick auf das Raumklima bietet Holz aufgrund der darin enthaltenen natürliche Öle, Wachse und Duftstoffe Vorteile. Die Holzleisten des Deckenaufbaus ermöglichen eine zufriedenstellende Leistung des Heiz- und/oder Kühlsystems bei gleichzeitig hochwertiger optischer Ausführung der Verkleidungselemente. Der Deckenaufbau weist aufgrund der Ausführung mit einer Vielzahl von Holzleisten, die sich entlang der Richtung der Längserstreckung des jeweiligen Wärmeleitprofils erstrecken, zudem vorteilhafte akustische Eigenschaften auf.

Bei einer Holzleiste handelt es sich um ein schmales und relativ dünnes Holzbrett, das auch als Holzlatte oder Holzband bezeichnet werden könnte. Günstigerweise handelt es sich bei der Holzleiste um Massivholz oder um verleimtes Holz. Die Holzleiste kann aus nahezu beliebigen Holzarten, d.h. sowohl Weich- als auch Hartholz, gefertigt sein. Auch aus unterschiedlichen Arten von Holz gefertigte Holzleisten können für einen Deckenaufbau flexibel und je nach Kundenwunsch verwendet werden.

Günstigerweise besteht das jeweilige Wärmeleitprofil aus Metall, insbesondere aus Aluminium oder einer Aluminiumlegierung. Bevorzugt weist das Wärmeleitprofil eine in Richtung der Längserstreckung verlaufende Rohraufnahme zur thermischen Verbindung mit einem Abschnitt des Wärmeträgerfluidrohrs auf. Das Wärmeträgerfluidrohr ist, zur Abgabe von Wärme an das Wärmeleitprofil und/oder zur Aufnahme von Wärme vom Wärmeleitprofil, von einem Wärmeträgerfluid, z.B. von Wasser oder einem Wassergemisch, durchströmt. Zum Heizen des Raumes wird über das Wärmeträgerfluid an das Wärmeleitprofil übertragene Wärme an die Holzleiste und durch Konvektion oder Abstrahlung an den Raum abgegeben. Entsprechendes gilt beim Kühlen des Raums in die Gegenrichtung, d.h., es wird Wärme aus dem Raum über die Holzleiste und das Wärmeleitprofil aufgenommen, und über das Wärmeträgerfluid aus dem Raum abgeführt.

Eine dem Wärmeleitprofil zugewandte Rückseite der Holzleiste liegt günstigerweise an einer Anlagefläche eines Anlagestegs des Wärmeleitprofils an. Aufgrund des, vorzugsweise flächigen, Anliegens der Rückseite der Holzleiste auf dem Wärmeleitprofil wird eine gute Wärmeübertragung zwischen der Holzleiste und der Wärmeleitprofil bewirkt. Die der Rückseite gegenüberliegende Vorderseite der Holzleiste ist dem Raum zugewandt. Die Vorderseiten der Holzleisten und gegebenenfalls noch weiterer Verkleidungselemente bilden zusammen die Deckenoberfläche oder Untersicht des Deckenaufbaus.

Beim Einpressen der Befestigungsstege in die Nuten entsteht eine kraftschlüssige Verbindung, welche auch als Presspassung bezeichnet werden könnte. D.h., der Befestigungssteg weist gegenüber der Nut ein Übermaß aus, das beim Einpressen der Befestigungsstege in die Nuten eine kraftschlüssige Verbindung hervorruft. Insbesondere kommt es zu einer lokalen, überwiegend elastischen, Verformung der Holzleiste im Bereich der Nut. In diesem Sinne könnte die Nut auch als Klemmnut bezeichnet werden. Durch diese Ausbildung, ist die Kontaktfläche des Wärmeleitprofils zur Holzleiste gegenüber einem alleinigen Anliegen der Rückseite am Anlagesteg wesentlich vergrößert. Da sich die Befestigungsstege in die Nuten hinein erstrecken, kann zudem ein beträchtlicher Wärmeanteil über die Befestigungsstege in den Bereich des Kerns der Holzleiste geleitet bzw. aus diesem Bereich aufgenommen werden. Dadurch kann die Leistung des Deckenaufbaus zum Heizen und/oder Kühlen erhöht werden.

Die Nuten sind an der Rückseite der jeweiligen Holzleiste eingeformt. Günstigerweise verlaufen die Nuten über die gesamte Längserstreckung der jeweiligen Holzleiste. Dadurch ist eine einfache und effiziente Fertigung der Holzleisten möglich.

Die vom Anlagesteg des Wärmeleitprofils abstehenden Befestigungsstege könnten auch als auskragende oder vorstehende Befestigungsstege bezeichnen. Vorzugsweise stehen die Befestigungsstege, die auch als Befestigungsrippen oder Befestigungsleisten bezeichnet werden könnten, orthogonal vom Anlagesteg ab. Besonders bevorzugt sind die Befestigungsstege materialeinstückig mit dem Wärmeleitprofil ausgebildet.

Es wäre denkbar und möglich, die jeweilige Holzleiste mit dem Wärmeleitprofil zusätzlich zur Befestigung mittels der in die Nuten eingepressten Befestigungsstege an einer Stelle mittels eines zusätzlichen Befestigungselements, z.B. einer Schraube, zu fixieren. Das Befestigungselement könnte dann auch als Festlager bezeichnet werden.

Besonders bevorzugt ist vorgesehen, dass ein Verhältnis einer in Richtung der Dickenerstreckung der Holzleiste gemessenen Nuttiefe zur Dicke der Holzleiste in einem Bereich von 1/5 bis 1/2 liegt. Eine große Nuttiefe bietet im Wesentlichen Platz für einen Befestigungssteg mit entsprechenden Abmaßen in Dickenerstreckung. Vorzugsweise erstreckt sich der Befestigungssteg über zumindest 90% der, besonders bevorzugt über die gesamte, Nuttiefe in Richtung zum Grund der jeweiligen Nut. Dadurch kann ein besonders vorteilhafter Wärmeübergang zwischen dem Wärmeleitprofil und der daran befestigten Holzleiste gewährleistet werden.

Es ist günstig, wenn der Abstand der Nuten der jeweiligen Holzleiste bzw. der Befestigungsstege des jeweiligen Wärmeleitprofils in einem Bereich von 3 mm bis 12 mm, vorzugsweise 4 mm bis 7 mm, liegt. Entsprechend liegt auch der Abstand der Befestigungsstege des jeweiligen Wärmeleitprofils günstigerweise in diesen vorteilhaften Bereichen. Ein in diesem Bereich liegender Abstand der Nuten gewährleistet eine zuverlässige Befestigung der Holzleiste und einen guten Wärmeübergang.

In einer bevorzugten Ausführungsform weisen die Befestigungsstege überstehende Verankerungsrippen auf, die an zumindest einer Seitenfläche der Nut angreifen. Die Verankerungsrippen ermöglichen ein Eingraben, d.h. Verankern, der Befestigungsstege in den Seitenflächen der Nuten der Holzleiste. Dadurch ist eine besonders zuverlässige Befestigung der Holzleiste auf dem jeweiligen Wärmeleitprofil gewährleistet. Man könnte im Zusammenhang mit den Verankerungsrippen auch davon sprechen, dass die Verankerungsrippen seitlich von den Befestigungsstegen abstehen. Im Weiteren ermöglichen die, günstigerweise über die gesamte Längserstreckung verlaufenden, Verankerungsrippen eine sichere Befestigung bei großen thermisch bedingten Ausdehnungsunterschieden zwischen der Holzleiste und dem jeweiligen Wärmeleitprofil. Die Verankerungsrippen könnten auf nur einer Seite des Befestigungsstegs oder an einander gegenüberliegenden Seiten der Befestigungsstege angeordnet sein.

Die Verankerungsrippen könnten, in einem Querschnitt orthogonal zur Längserstreckung des Wärmeleitprofils gesehen, sägezahnförmig oder gewellt ausgebildet sein. Derartig ausgebildete Befestigungsstege könnten dann auch als Harpunenstege bezeichnet werden.

Bevorzugt werden bei einem erfindungsgemäßen Deckenaufbau Einheiten ausgebildet, welche jeweils eines der Wärmeleitprofile und eine daran angebrachte Holzleiste oder mehrere daran angebrachte Holzleisten aufweisen, die in Richtung der Längserstreckung des Wärmeleitprofils aufeinander folgen. Diese sind voneinander beabstandet, und eine orthogonal zur Längserstreckung des Wärmeleitprofils gemessene Spaltbreite zwischen den Holzleisten von einander benachbarten Einheiten liegt günstigerweise in einem Bereich von 5 mm bis 20 mm, besonders bevorzugt in einem Bereich von 9 mm bis 15 mm. Der Spalt zwischen den einander benachbarten Holzleisten verläuft entlang der Längsrichtung der Holzleisten bzw. entlang der Richtung der Längserstreckung der Wärmeleitprofile. Die jeweiligen Spalte zwischen benachbarten Holzleisten erhöhen die Schallabsorption des Deckenaufbaus, sodass zusätzliche Maßnahmen zur Verbesserung der Akustikeigenschaften des Deckenaufbaus, je nach Anwendungsfall, entfallen können.

Es ist vorteilhafterweise vorgesehen, dass das jeweilige Wärmeleitprofil zumindest zwei, an gegenüberliegenden Seiten angeordnete und seitlich abstehende Randstege zur Emission/Absorption von Wärmestrahlung aufweisen. Der jeweilige Randsteg erstreckt sich günstigerweise in Richtung der Längserstreckung des Wärmeleitprofils und schließt, in einem Schnitt orthogonal zur Längserstreckung gesehen, mit einer Anlageebene, in der die Anlagefläche des Anlagestegs des Wärmeleitprofils liegt, einen Winkel von +/- 45° ein, wobei ein Abstand des Randstegs von der Anlageebene in eine Richtung zum abstehenden Ende hin zunimmt. Die Randstege erhöhen die Wärmeabgabe bzw. Wärmeaufnahme des Deckenaufbaus, wobei insbesondere der Anteil der durch Wärmestrahlung übertragenen Wärme gesteigert werden kann.

Günstigerweise sind Seitenflächen der jeweiligen Holzleiste zumindest in Bereichen abgeschrägt, die an die dem Wärmeleitprofil zugewandte Rückseite der Holzleiste anschließen. Die Breite der Holzleiste verringert sich somit zur Rückseite hin. Die in Richtung der Dickenerstreckung der Holzleiste gemessene Ausdehnung der abgeschrägten Bereiche beträgt vorzugsweise zumindest ein Drittel, besonders bevorzugt zumindest die Hälfte, der Dicke der Holzleiste. Vorteilhafterweise liegt die in Richtung der Dickenerstreckung der Holzleiste gemessene Ausdehnung der abgeschrägten Bereiche in einem Bereich von 4 mm bis 16 mm. Die abgeschrägten Bereiche verbessern die akustischen Eigenschaften des Deckenaufbaus. In Kombination mit gegebenenfalls vorgesehenen Randstegen kann der Anteil der durch Wärmestrahlung übertragenen Wärme gesteigert werden kann, da eine Abschattung der Randstege durch die abgeschrägten Bereiche der Holzleisten verringert werden kann.

Weitere Merkmale und Einzelheiten der Erfindung werden anhand des in den Figuren gezeigten Ausführungsbeispiels eines erfindungsgemäßen Deckenaufbaus erläutert. Es zeigen:
Fig. 1 eine Ansicht von unten auf die Untersicht/Dekorseite eines erfindungsgemäßen Deckenaufbaus;
Fig. 2 eine Ansicht von oben auf den in Fig. 1 gezeigten Deckenaufbau;
Fig. 3 den Schnitt A-A der Fig. 1, wobei die den Deckenaufbau tragende Deckentragstruktur dargestellt ist;
Fig. 4 das Detail B der Fig. 3, und
Fig. 5 das in Fig. 4 dargestellte Wärmeleitprofil und die Holzleiste in einer Explosionsdarstellung.

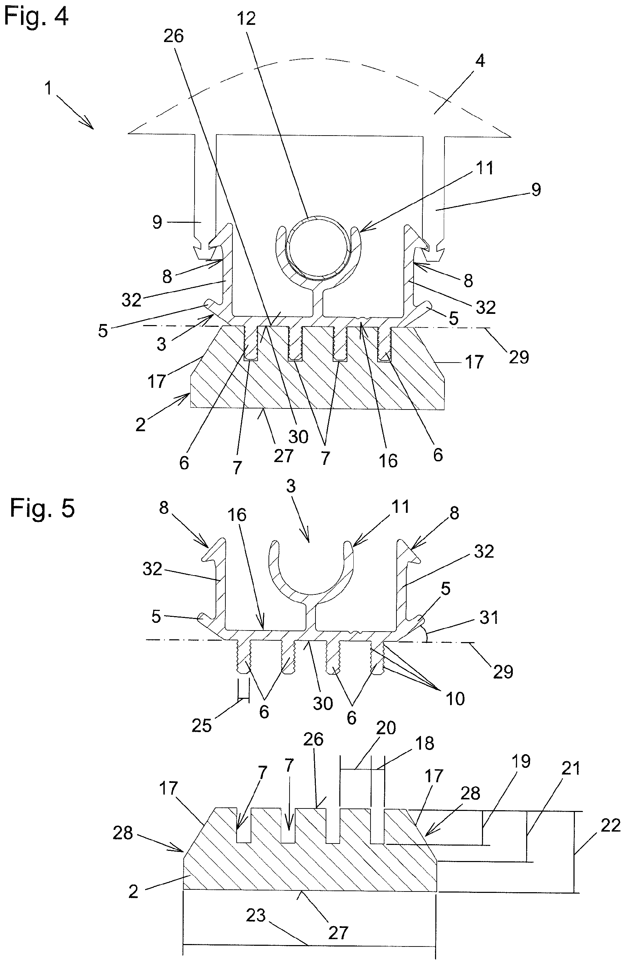

Der in den Figuren gezeigte Deckenaufbau 1 weist längserstreckte Wärmeleitprofile 3 auf, an denen Verkleidungselemente befestigt sind. Die Wärmeleitprofile 3 sind im Ausführungsbeispiel aus Metall, insbesondere Aluminium, gefertigt und z.B. mittels Strangpressen hergestellt. Zur thermischen Verbindung mit einem Abschnitt eines Wärmeträgerfluidrohrs 12 weisen die Wärmeleitprofile 3 jeweils eine Rohraufnahme 11 auf, vgl. Fig. 4. Im Ausführungsbeispiel umgreifen zwei, nicht gesondert bezeichnete, Schenkel der Rohraufnahme 11 das Wärmeträgerfluidrohr 12 in Umfangsrichtung abschnittsweise.

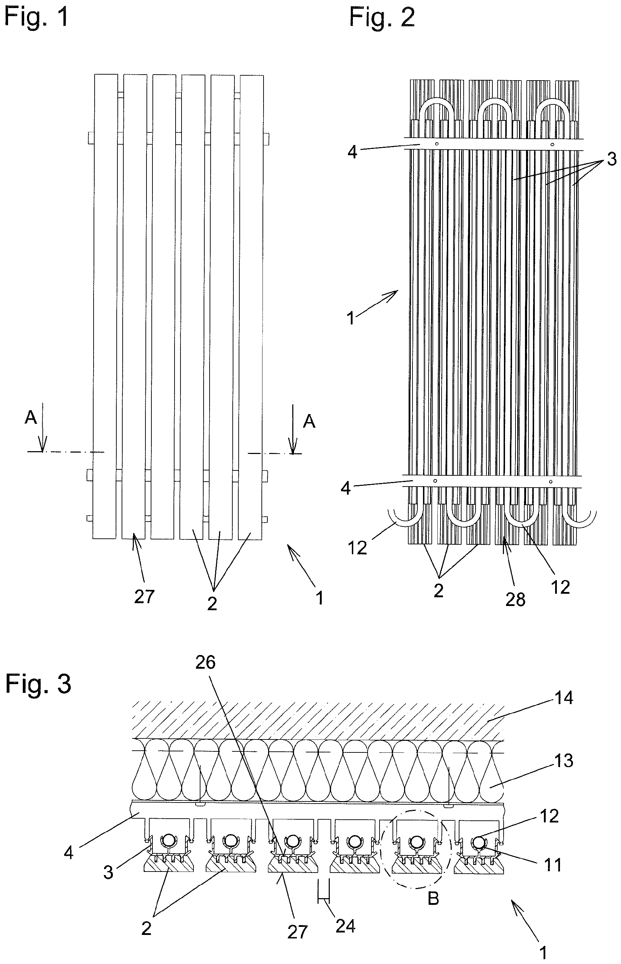

Das Wärmeträgerfluidrohr 12 ist im Ausführungsbeispiel mäanderförmig verlegt, vgl. Fig. 2. Derartige Anordnungen von Wärmeträgerfluidrohren 12 werden auch als Rohrregister bezeichnet. Die parallel zueinander ausgerichteten Abschnitte des Wärmeträgerfluidrohrs 12, die in der Rohraufnahme 11 aufgenommen sind, sind zwischen bogenförmigen Umlenkungen des mäanderförmigen Wärmeträgerfluidrohrs 12 angeordnet. Das Wärmeträgerfluidrohr 12 ist von einem, von einer Pumpe eines Heiz- und/oder Kühlkreislaufs beförderten, Wärmeträgerfluid durchströmt. All dies ist hinlänglich bekannt.

Ein jeweiliges Verkleidungselement ist eine, sich in Richtung der Längserstreckung des jeweiligen Wärmeleitprofils 3 erstreckende, Holzleiste 2. D.h., die am jeweiligen Wärmeleitprofil 3 befestigten Holzleisten 2 verlaufen parallel zur Richtung der Längserstreckung des Wärmeleitprofils 3. Dabei können auch mehrere Holzleisten 2 in Längsrichtung aufeinanderfolgend, d.h. fluchtend, auf dem Wärmeleitprofil 3 befestigt sein. Dies ist in den Figuren nicht gesondert dargestellt.

Die Rückseite 26 der jeweiligen Holzleiste 2 liegt an einer Anlagefläche 30 eines Anlagestegs 16 des Wärmeleitprofils 3 an. Die Anlagefläche 30 liegt im Ausführungsbeispiel in einer Anlageebene 29, die z.B. in den Fig. 4, 5 eingezeichnet ist.

Die Holzleisten 2 weisen jeweils eine, der Rückseite 26 gegenüberliegende, Vorderseite 27 auf, welche dem Raum zugewandt ist. Jede der Holzleisten 2 weist in Längsrichtung verlaufende Nuten 7 auf, die an der Rückseite 26 eingeformt sind. Die Nuten 7 sind beispielsweise mittels eines Säge- oder Fräswerkzeugs in die Holzleisten 2 eingebracht. Im Ausführungsbeispiel verlaufen die Nuten 7, wie dies auch bevorzugt ist, über die gesamte Längserstreckung der Holzleisten 2.

Im Ausführungsbeispiel sind die Nuten 7, in einer Schnittansicht orthogonal zur Längsrichtung der Holzleisten 2 gesehen, rechteckförmig ausgebildet, vgl. Fig. 5. Dies ist nur eine mögliche Ausführungsform der Nuten 7, die in einer anderen Ausführungsvariante auch eine von der Reckteckform abweichende, z.B. eine schwalbenschanzförmige, Kontur aufweisen könnten.

Die Wärmeleitprofile 3 weisen in Richtung der Längserstreckung verlaufende, vom Anlagesteg 16 des Wärmeleitprofils 3 abstehende Befestigungsstege 6 auf. Im Ausführungsbeispiel sind die Befestigungsstege 6 rechtwinkelig zur Anlagefläche 30 bzw. zur Anlageebene 29 ausgerichtet. Die Befestigungsstege 6 sind zur Fixierung der jeweiligen Holzleiste 2 auf dem jeweiligen Wärmeleitprofil 3 in die Nuten 7 eingepresst. Durch die rechtwinkelig zur Anlagefläche 30 ausgerichteten Befestigungsstege 6 ist es möglich, die Holzleiste 2 und das jeweilige Wärmeleitprofil 3 durch eine Bewegung der beiden Teile in eine Richtung orthogonal zur Anlageebene 29 aufeinander zu, zusammenzufügen. Abgesehen von einem Zusammenfügen der Holzleiste 2 und des Wärmeleitprofils 3 in eine Richtung orthogonal zur Anlageebene 29, wäre es auch denkbar und möglich, die Holzleisten 2 in Längsrichtung auf die Wärmeleitprofile 3 aufzuschieben.

Die Befestigungsstege 6 weisen, zumindest im nicht in die Nut 7 eingepressten Zustand, ein Übermaß gegenüber der jeweiligen Nut 7 auf. In anderen Worten ist die Nutbreite 18 der jeweiligen Nut 7 kleiner als die Stegbreite 25 des jeweiligen Befestigungsstegs 6. Die Stegbreite 25 und die Nutbreite 18 sind in Fig. 5 eingezeichnet. Im Ausführungsbeispiel weist die Nut 7 eine Nutbreite 18 in einem Bereich von 2 mm bis 5 mm auf. Da der Befestigungssteg 6 gegenüber der jeweiligen Nut 7 ein Übermaß aufweist, entsteht beim Zusammenfügen der jeweiligen Holzleiste 2 und des jeweiligen Wärmeleitprofils 3 eine kraftschlüssige bzw. reibschlüssige Verbindung zwischen der Holzleiste 2 und dem jeweiligen Wärmeleitprofil 3. Im Ausführungsbeispiel ist die Holzleiste 2 jeweils ausschließlich mittels der in die Nuten 7 eingepressten Befestigungsstege 6 am jeweiligen Wärmeleitprofil 3 fixiert.

Im Ausführungsbeispiel weisen die Befestigungsstege 6 überstehende Verankerungsrippen 10 auf, die an einander gegenüberliegenden Seitenflächen der Nut 7 angreifen. D.h., die Verankerungsrippen 10 sind an einander gegenüberliegenden Seiten der Befestigungsstege 6 angeordnet, vgl. Fig. 5. Im Ausführungsbeispiel verlaufen die Verankerungsrippen 10, wie dies auch bevorzugt ist, über die gesamte Längserstreckung der Wärmeleitprofile 3.

Die Verankerungsrippen 10 graben sich, im in die Nuten 7 eingepressten Zustand der Befestigungsstege 6, lokal in die Oberfläche der Seitenflächen der Nuten 7 ein. Dadurch wird die Reibung zwischen der Holzleiste 2 und dem Wärmeleitprofil 3 erhöht. Im Ausführungsbeispiel sind die Verankerungsrippen 10, in einem Querschnitt orthogonal zur Längserstreckung des Wärmeleitprofils 3 gesehen, gewellt ausgebildet. Die Verankerungsrippen 10 führen die Holzleiste 2, bei unterschiedlichen Längenausdehnungen infolge der thermischen Belastung beim Heizen- und/oder Kühlen, in Richtung der Längserstreckung des Wärmeleitprofils 3. Dies ist insbesondere bei relativ langen Holzleisten 2 bzw. Wärmeleitprofilen 3 vorteilhaft.

Im Ausführungsbeispiel ist vorgesehen, dass der Abstand 20 der zueinander benachbarten Nuten 7 der jeweiligen Holzleiste 2 bzw. der zueinander benachbarten Befestigungsstege 6 des jeweiligen Wärmeleitprofils 3 in einem Bereich von 4 mm bis 7 mm liegt.

Ein Verhältnis einer in Richtung der Dickenerstreckung der Holzleiste 2 gemessenen Nuttiefe 19 zur Dicke der Holzleiste 2 liegt im Ausführungsbeispiel in einem Bereich von 1/5 bis 1/2. Je größer die Nuttiefe 19 ist bzw. je weiters sich der Befestigungssteg 6 in die jeweilige Nut 7 hinein erstreckt, umso besser ist der Wärmeübergang zwischen der Holzleiste 2, insbesondere eines Kerns der Holzleiste 2, und dem jeweiligen Wärmeleitprofil 3 und damit die Leistung des Deckenaufbaus 1 zum Heizen und/oder Kühlen des Raumes. Der jeweilige Befestigungssteg 6 erstreckt sich im Ausführungsbeispiel über zumindest 90% der Nuttiefe 19 in Richtung zum Grund der Nut 7 in die Nut 7 hinein.

Die Dicke 22 der Holzleiste 2 liegt günstigerweise in einem Bereich von 10 mm bis 20 mm. Im Ausführungsbeispiel liegt die Dicke 22 der Holzleiste 2 in einem Bereich von 11 mm bis 15 mm. Die Breite 23 der Holzleiste 2 liegt im Ausführungsbeispiel, wie dies auch bevorzugt ist, in einem Bereich von 30 mm bis 90 mm.

Im Ausführungsbeispiel ist vorgesehen, dass Seitenflächen 28 der jeweiligen Holzleiste 2 in Bereichen abgeschrägt sind, an die dem Wärmeleitprofil 3 zugewandte Rückseite 26 der Holzleiste 2 anschließen. Diese abgeschrägten Bereiche 17 sind in den Fig. 4 eingezeichnet. Ausgehend von der Vorderseite 27 ist die Holzleiste 2 in Richtung zur Rückseite 26 hin verjüngt, d.h. die Breite der Holzleiste 2 verringert sich in Richtung zur Rückseite 26 hin. Eine in Richtung der Dickenerstreckung der Holzleiste 2 gemessene Ausdehnung 21 der abgeschrägten Bereiche 17 liegt im Ausführungsbeispiel in einem Bereich von 4 mm bis 16 mm. Günstigerweise beträgt die Ausdehnung 21 der abgeschrägten Bereiche 17 in Richtung der Dickenerstreckung der Holzleiste 2 zumindest ein Drittel, vorzugsweise zumindest die Hälfte, der Dicke 22 der Holzleiste 2.

Im Ausführungsbeispiel ist im Weiteren vorgesehen, dass benachbarte Einheiten, welche jeweils eines der Wärmeleitprofile 3 und eine daran angebrachte Holzleiste 2 voneinander beabstandet sind, vgl. Fig. 3. Eine orthogonal zur Längserstreckung des Wärmeleitprofils 3 gemessene Spaltbreite 24 zwischen den Holzleisten 2 von zueinander benachbarten Einheiten liegt günstigerweise in einem Bereich von 5 mm bis 20 mm, im Ausführungsbeispiel in einem Bereich von 9 mm bis 15 mm. Die voneinander beabstandeten Holzleisten 2 erhöhen die schallabsorbierenden Eigenschaften des Deckenaufbaus 1, wie dies bereits erläutert wurde. Weiters tragen auch die optionalen abgeschrägten Bereiche 17 der Holzleisten 2 zur Verbesserung der Akustikeigenschaften des Deckenaufbaus 1 bei.

Das jeweilige Wärmeleitprofil 3 weist im Ausführungsbeispiel zwei, an gegenüberliegenden Seiten angeordnete und seitlich abstehende Randstege 5 auf. Die Randstege 5 ermöglichen die Emission und/oder Absorption von Wärmestrahlung und erhöhen damit die Leistung des Wärmeleitprofils 3 des Deckenaufbaus 1. Der jeweilige Randsteg 5 erstreckt sich in Richtung der Längserstreckung des Wärmeleitprofils 3 und schließt, in einem Schnitt orthogonal zur Längserstreckung gesehen, mit der Anlageebene 29 einen Winkel 31 von +/- 45° ein. Der Abstand des Randstegs 5 von der Anlageebene 29 nimmt, in einer Richtung zum abstehenden Ende des jeweiligen Randstegs 5 hin, zu. Die Randstege 5 sind somit quer zur Richtung der Dickenerstreckung der Holzleiste 2 ausgerichtet.

Der jeweilige Randsteg 5 ist im Ausführungsbeispiel an einen jeweiligen Schenkel 32, die an einander gegenüberliegenden Seiten seitlich des Anlagestegs 16 angeordnet sind, angeformt. Im Weiteren schließt das jeweilige Rastelement 5 im Ausführungsbeispiel an den Anlagesteg 16 des Wärmeleitprofils 3 an. In einer anderen Ausführungsform könnte der jeweilige Randsteg 5, bezogen auf eine Richtung orthogonal zur Anlageebene 29, vom Anlagesteg 16 beabstandet am Schenkel 32 angeordnet sein. Auch dann gilt hinsichtlich des mit der Anlageebene 29 eingeschlossenen Winkels 31 das zuvor Gesagte. In einer Ausführungsvariante wäre es auch denkbar und möglich, dass das Wärmeleitprofil 3 mehr als zwei Randstege 5, z.B. jeweils zwei seitlich vom Schenkel 32 abstehende Randstege 5, aufweist. Auf Randstege 5 könnte in einer anderen Ausführungsform aber auch verzichtet werden.

Im Ausführungsbeispiel erhöhen die abgeschrägten Bereiche 17 die durch Wärmestrahlung übertragbare Leistung des Wärmeleitprofils 3, da diese eine direkte Abstrahlung der Wärme ausgehend von einer dem Raum zugewandten Seitenfläche des Randstegs 5 in eine Richtung orthogonal zur Seitenfläche in den Raum hinein ermöglichen. Entsprechendes gilt in Hinblick auf den Kühleffekt bei der Absorption von Wärmestrahlung zum Kühlen des Raums.

Im Ausführungsbeispiel ist der Deckenaufbau 1 an einer, in Fig. 3 dargestellten, Deckentragstruktur 14 montiert. Die Verbindung des Deckenaufbaus 1 mit der Deckentragstruktur 14 ist nicht im Detail dargestellt und kann in hinlänglich bekannter Art und Weise erfolgen. In Fig. 3 sind lediglich Schraubenköpfe von Befestigungselementen zur Befestigung einer Tragschiene 4 des Deckenaufbaus 1 dargestellt. Zwischen der Tragschiene 4 und der Deckentragstruktur 14 ist in der gezeigten Anordnung eine optionale Dämmung 13 vorgesehen, die die Energieeffizienz der Heiz- und/oder Kühldecke verbessert. Die Deckentragstruktur 14 könnte beispielsweise als (Stahl-)Betondecke ausgeführt sein. Auch Deckentragstrukturen 14 aus anderem Material, z.B. aus Holz oder Metall sind denkbar und möglich. Die Tragschienen 4 sind im Ausführungsbeispiel längserstreckt ausgebildet, wie dies auch bevorzugt ist. An den Tragschienen 4 sind Gegenrastelemente 9 angeordnet. Die Tragschienen 4 des Deckenaufbaus 1 sind orthogonal zu den Wärmeleitprofilen 3 angeordnet, vgl. Fig. 2.

Das jeweilige Wärmeleitprofil 3 weist im Ausführungsbeispiel zwei Rastelemente 8 zur Verbindung mit den Gegenrastelementen 9 der jeweiligen Tragschiene 4 auf. Das Rastelement 8 schnappt im mit dem Gegenrastelement 9 verbundenen Zustand in dieses ein. Im Ausführungsbeispiel weist das Rastelement 8 eine nicht gesondert bezeichnete Rastnase auf, die am Schenkel 32 angeordnet ist, vgl. Fig. 5. Der Schenkel 32 ist, insbesondere zur wieder lösbaren Verbindung mit dem Gegenrastelement 9, elastisch deformierbar. Alternativ oder zusätzlich könnte das Gegenrastelement elastisch deformierbar ausgebildet sein. Die Nase des Rastelements 8 greift im mit der Tragschiene 4 verbundenen Zustand in eine Vertiefung des Gegenrastelements 9 ein, vgl. Fig. 4. Derartige Rastelemente 8 bzw. Gegenrastelemente 9 sind in vielfältiger Art und Weise bekannt. Grundsätzlich wäre es auch denkbar und möglich, das Wärmeleitprofil 3 mittels anderer Verbindungselemente, z.B. mittels Schrauben oder Nieten, mit der Tragschiene 4 zu verbinden.

Die Schenkel 32 sind im Ausführungsbeispiel orthogonal zur Anlageebene 29 ausgerichtet, wobei die Schenkel 32 auf der der Vorderseite 27 gegenüberliegenden Seite des Wärmeleitprofils 3 angeordnet sind und vom Anlagesteg 16 abstehen. Im Ausführungsbeispiel sind die Schenkel 32 und der Anlagesteg 16 U-förmig ausgebildet.

In Fig. 2 ist gut ersichtlich, dass die Holzleisten 2 im Ausführungsbeispiel in Längsrichtung an einander gegenüberliegenden Stirnseiten über die Wärmeleitprofile 3 überstehen. In der Ansicht auf die Rückseiten 28 der Holzleisten 2 sind in den nicht von den Wärmeleitprofilen 3 abgedeckten, d.h. auskragenden, Bereichen die schon erwähnten Rohrbögen des Wärmeträgerfluidrohrs 12 angeordnet.

In den Figuren 1-3 sind aus Gründen der Übersichtlichkeit nur sechs Holzleisten 2 und Wärmeleitprofile 3 dargestellt. Die Anzahl der Holzleisten 2 und Wärmeleitprofile 3 ist aber nicht auf diese Anzahl beschränkt. Auch kann das jeweilige Wärmeleitprofil 3 an mehr als zwei Tragschienen 4 befestigt sein, insbesondere bei der Verwendung von langen Holzleisten 2 bzw. Wärmeleitprofilen 3.

### Legende zu den Hinweisziffern:

| | | | |
|---|---|---|---|
| 1 | Deckenaufbau | 30 | Anlagefläche |
| 2 | Holzleiste | 31 | Winkel |
| 3 | Wärmeleitprofil | 32 | Schenkel |
| 4 | Verankerungselement | | |
| 5 | Randsteg | | |
| 6 | Befestigungssteg | | |
| 7 | Nut | | |
| 8 | Rastelement | | |
| 9 | Gegenrastelement | | |
| 10 | Verankerungsrippe | | |
| 11 | Rohraufnahme | | |
| 12 | Wärmeträgerfluidrohr | | |
| 13 | Dämmung | | |
| 14 | Deckentragstruktur | | |
| 16 | Anlagesteg | | |
| 17 | abgeschrägter Bereich | | |
| 18 | Nutbreite | | |
| 19 | Nuttiefe | | |
| 20 | Abstand | | |
| 21 | Ausdehnung | | |
| 22 | Dicke | | |
| 23 | Breite | | |
| 24 | Spaltbreite | | |
| 25 | Stegbreite | | |
| 26 | Rückseite | | |
| 27 | Vorderseite | | |
| 28 | Seitenfläche | | |
| 29 | Anlageebene | | |

## Patentansprüche

1. Deckenaufbau (1) zum Heizen und/oder Kühlen eines Raumes, wobei der Deckenaufbau (1) längserstreckte Wärmeleitprofile (3), mit denen jeweils ein Abschnitt eines Wärmeträgerfluidrohrs (12) des Deckenaufbaus (1) thermisch in Verbindung steht, und, an den Wärmeleitprofilen (3) befestigte, Verkleidungselemente aufweist, wobei ein jeweiliges Verkleidungselement eine, sich in Richtung der Längserstreckung des jeweiligen Wärmeleitprofils (3) erstreckende, Holzleiste (2) ist, **dadurch gekennzeichnet, dass** die Holzleisten (2) in Längsrichtung verlaufende Nuten (7) und die Wärmeleitprofile (3) in Richtung der Längserstreckung verlaufende, von einem Anlagesteg (16) des Wärmeleitprofils (3) abstehende, Befestigungsstege (6) aufweisen, die zur Fixierung der jeweiligen Holzleiste (2) auf dem jeweiligen Wärmeleitprofil (3), in die Nuten (7) eingepresst sind.

2. Deckenaufbau (1) nach Anspruch 1, **dadurch gekennzeichnet, dass** die Befestigungsstege (6) überstehende Verankerungsrippen (10) aufweisen, die an zumindest einer Seitenfläche der Nut (7) angreifen.

3. Deckenaufbau (1) nach Anspruch 1 oder 2, **dadurch gekennzeichnet, dass** der Abstand (20) der Nuten (7) der jeweiligen Holzleiste (2) bzw. der Befestigungsstege (6) des jeweiligen Wärmeleitprofils (3) in einem Bereich von 3 mm bis 12 mm, vorzugsweise 4 mm bis 7 mm, liegt.

4. Deckenaufbau (1) nach einem der Ansprüche 1 bis 3, **dadurch gekennzeichnet, dass** ein Verhältnis einer in Richtung der Dickenerstreckung der Holzleiste (2) gemessenen Nuttiefe (19) zur Dicke der Holzleiste (2) in einem Bereich von 1/5 bis 1/2 liegt.

5. Deckenaufbau (1) nach einem der Ansprüche 1 bis 4, **dadurch gekennzeichnet, dass** der Deckenaufbau (1) Tragschienen (4) zur Befestigung der Wärmeleitprofile (3) umfasst, wobei das jeweilige Wärmeleitprofil (3) zumindest ein Rastelement (8) zur Verbindung mit einem Gegenrastelement (9) der jeweiligen Tragschiene (4) aufweist.

6. Deckenaufbau (1) nach einem der Ansprüche 1 bis 5, **dadurch gekennzeichnet, dass** Seitenflächen (28) der jeweiligen Holzleiste (2) zumindest in Bereichen abgeschrägt sind, die an die dem Wärmeleitprofil (3) zugewandte Rückseite (26) der Holzleiste (2) anschließen, wobei die in Richtung der Dickenerstreckung der Holzleiste (2) gemessene Ausdehnung (21) der abgeschrägten Bereiche (17) zumindest ein Drittel, vorzugsweise zumindest die Hälfte, der Dicke der Holzleiste (2) beträgt.

7. Deckenaufbau (1) nach einem der Ansprüche 1 bis 6, **dadurch gekennzeichnet, dass** das jeweilige Wärmeleitprofil (3) zumindest zwei, an gegenüberliegenden Seiten angeordnete und seitlich abstehende Randstege (5) zur Emission/Absorption von Wärmestrahlung aufweisen, wobei sich ein jeweiliger Randsteg (5) in Richtung der Längserstreckung des Wärmeleitprofils (3) erstreckt und, in einem Schnitt orthogonal zur Längserstreckung gesehen, mit einer Anlageebene (29), in der eine Anlagefläche (30) des Wärmeleitprofils (3) an der die Rückseite (26) der Holzleiste (2) anliegt, einen Winkel (31) von +/- 45° einschließt, wobei ein Abstand des Randstegs (5) von der Anlageebene (29) in eine Richtung zum abstehenden Ende hin zunimmt.

8. Deckenaufbau (1) nach einem der Ansprüche 1 bis 7, **dadurch gekennzeichnet, dass** benachbarte Einheiten welche jeweils eines der Wärmeleitprofile (3) und eine daran angebrachte Holzleiste (2) oder mehrere daran angebrachte Holzleisten (2) aufweisen, die in Richtung der Längserstreckung des Wärmeleitprofils (3) aufeinander folgen, voneinander beabstandet sind, wobei eine orthogonal zur Richtung der Längserstreckung des Wärmeleitprofils (3) gemessene Spaltbreite (24) zwischen den Holzleisten (2) von einander benachbarten Einheiten in einem Bereich von 5 mm bis 20 mm, bevorzugt 9 mm bis 15 mm, liegt.

9. Deckenaufbau (1) nach einem der Ansprüche 1 bis 8, **dadurch gekennzeichnet, dass** die Dicke (22) der Holzleiste (2) in einem Bereich von 10 mm bis 20 mm, vorzugsweise 11 mm bis 15 mm, liegt und/oder dass die Breite (23) der Holzleiste (2) in einem Bereich von 30 mm bis 90 mm liegt.

10. Deckenaufbau (1) nach einem der Ansprüche 1 bis 9, **dadurch gekennzeichnet, dass** eine dem Wärmeleitprofil (3) zugewandte Rückseite (26) der Holzleiste (2), vorzugsweise flächig, an einer Anlagefläche (30) des Anlagestegs (16) anliegt und eine der Rückseite (26) gegenüberliegende Vorderseite (27) der Holzleiste (2) dem Raum zugewandt ist.

## Claims

1. A ceiling structure (1) for the heating and/or cooling of a room, wherein the ceiling structure (1) has longitudinally-extended heat conducting profiles (3), in a thermal connection with a respective portion of a heat transfer fluid pipe (12) of the ceiling structure (1), and covering elements, secured to the heat conducting profiles (3), wherein a respective covering element is a wooden strip (2) extending in the direction of the longitudinal extension of the respective heat conducting profile (3), **characterised in that** the wooden strips (2) have grooves (7), running in a longitudinal direction, and the heat conducting profiles (3) have securing elongated members (6), running in the direction of the longitudinal extension and projecting from a contact elongated member (16) of the heat conducting profile (3), which are pressed into the grooves (7) in order to fix the respective wooden strip (2) on the respective heat conducting profile (3).

2. A ceiling structure (1) according to claim 1, **characterised in that** the securing elongated members (6) have protruding anchoring ribs (10) which engage at least one side face of the groove (7).

3. A ceiling structure (1) according to claim 1 or 2, **characterised in that** the spacing (20) of the grooves (7) of the respective wooden strip (7) or of the securing elongated members (6) of the respective heat conducting profile (3) lies in a range from 3 mm to 12 mm, preferably 4 mm to 7 mm.

4. A ceiling structure (1) according to any one of claims 1 to 3, **characterised in that** a ratio of a groove depth (19), measured in the direction of the thickness extension of the wooden strip (2), to the thickness of the wooden strip (2) lies in a range from 1/5 to 1/2.

5. A ceiling structure (1) according to any one of claims 1 to 4, **characterised in that** the ceiling structure (1) comprises bearing rails (4) for securing the heat conducting profiles (3), wherein the respective heat conducting profile (3) has at least one locking element (8) for connection to a counter locking element (9) of the respective bearing rail (4).

6. A ceiling structure (1) according to any one of claims 1 to 5, **characterised in that** side faces (28) of the respective wooden strip (2) are chamfered at least in regions which adjoin the rear side (26), facing the heat conducting profile (3), of the wooden strip (2), wherein the extent (21), measured in the direction of the thickness extension of the wooden strip (2), of the chamfered regions (17) amounts to at least one third, preferably at least half, of the thickness of the wooden strip (2).

7. A ceiling structure (1) according to any one of claims 1 to 6, **characterised in that** the respective heat conducting profile (3) has at least two edge elongated members (5), arranged at opposite sides and laterally protruding, for emission/absorption of heat radiation, wherein a respective edge elongated member (5) extends in the direction of the longitudinal extension of the heat conducting profile (3) and, viewed in a section orthogonal to the longitudinal extension, forms an angle (31) of +/- 45° with a contact plane (29) in which a contact surface (30) of the heat conducting profile (3) contacts the rear side (26) of the wooden strip (2), wherein a spacing of the edge elongated member (5) from the contact plane (29) increases in a direction towards the protruding end.

8. A ceiling structure (1) according to any one of claims 1 to 7, **characterised in that** adjacent units, which in each case have one of the heat conducting profiles (3) and a wooden strip (2) attached thereto or a plurality of wooden strips (2) attached thereto in a successive manner in the direction of the longitudinal extension of the heat conducting profile (3), are spaced apart from one another, wherein a gap width (24), measured orthogonally to the direction of the longitudinal extension of the heat conducting profile (3), lies between the wooden strips (2) of adjacent units in a range from 5 mm to 20 mm, preferably 9 mm to 15 mm.

9. A ceiling structure (1) according to any one of claims 1 to 8, **characterised in that** the thickness (22) of the wooden strip (2) lies in a range from 10 mm to 20 mm, preferably 11 mm to 15 mm, and/or **in that** the width (23) of the wooden strip (2) lies in a range from 30 mm to 90 mm.

10. A ceiling structure (1) according to any one of claims 1 to 9, **characterised in that** a rear side (26), facing the heat conducting profile (3), of the wooden strip (2) contacts a contact surface (30) of the contact elongated member (16), preferably in a surface-to-surface manner, and a front side (27), opposite the rear side (26), of the wooden strip (2) faces the room.

## Revendications

1. Structure de plafond (1) pour chauffer et/ou refroidir une pièce, la structure de plafond (1) étant munie de profilés conducteurs thermiques (3) s'étendant dans le sens de la longueur, à chacun desquels est relié thermiquement un tronçon d'un conduit de fluide caloporteur (12) de la structure de plafond (1), et d'éléments d'habillage fixés aux profilés conducteurs thermiques (3), chaque élément d'habillage étant une latte de bois (2) s'étendant dans la direction de l'extension longitudinale du profilé conducteur thermique (3) correspondant, **caractérisée en ce que** les lattes de bois (2) sont munies de rainures (7) s'étendant dans la direction longitudinale, et les profilés conducteurs thermiques (3) sont munis de nervures de fixation (6) s'étendant dans la direction de l'extension longitudinale, qui saillent d'une aile de contact (16) du profilé conducteur thermique (3) et qui sont poussés dans les rainures (7) pour fixer la latte de bois considérée (2) sur le profilé conducteur thermique correspondant (3).

2. Structure de plafond (1) selon la revendication 1, **caractérisée en ce que** les nervures de fixation (6) sont munies de nervures d'ancrage saillantes (10) qui s'engagent sur au moins une surface latérale de la rainure (7).

3. Structure de plafond (1) selon la revendication 1 ou 2, **caractérisée en ce que** la distance (20) des rainures (7) de chaque latte de bois (2) ou de chaque nervure de fixation (6) du profilé conducteur thermique (3) se situe dans une plage allant de 3 mm à 12 mm, de préférence allant de 4 mm à 7 mm.

4. Structure de plafond (1) selon l'une des revendications 1 à 3, **caractérisée en ce qu'**un rapport entre une profondeur de rainure (19) mesurée dans la direction de l'extension de l'épaisseur de la latte de bois (2) et l'épaisseur de la latte de bois (2) se situe dans une plage allant de 1/5 à 1/2.

5. Structure de plafond (1) selon l'une des revendications 1 à 4, **caractérisée en ce que** la structure de plafond (1) comprend des rails support (4) pour fixer les profilés conducteurs thermiques (3), chaque profilé conducteur thermique (3) ayant au moins un élément de verrouillage (8) pour la connexion à un élément de verrouillage complémentaire (9) du rail support correspondant (4).

6. Structure de plafond (1) selon l'une des revendications 1 à 5, **caractérisée en ce que** des surfaces latérales (28) de chaque latte de bois (2) sont biseautées au moins dans des zones qui sont adjacentes à la face arrière (26) de la latte de bois (2) dirigée vers le profilé conducteur thermique (3), l'étendue (21) des zones biseautées (17), mesurée dans la direction de l'extension de l'épaisseur de la latte de bois (2), représentant au moins un tiers, de préférence au moins la moitié, de l'épaisseur de la latte de bois (2).

7. Structure de plafond (1) selon l'une des revendications 1 à 6, **caractérisée en ce que** chaque profilé conducteur thermique (3) est muni pour l'émission/absorption de rayonnement thermique d'au moins deux languettes de bord (5) saillant latéralement et disposées sur des côtés opposés, chaque languette de bord (5) s'étendant dans la direction de l'extension longitudinale du profilé conducteur thermique (3) et, vu en coupe orthogonale à l'extension longitudinale, forme un angle (31) de +/-45° avec un plan de contact (29) dans lequel une surface de contact (30) du profilé conducteur thermique (3) est placée contre la face arrière (26) de la latte de bois (2), une distance de la languette de bord (5) par rapport au plan de contact (29) augmentant en direction de l'extrémité saillante.

8. Structure de plafond (1) selon l'une des revendications 1 à 7, **caractérisée en ce que** des unités adjacentes sont munies chacune de l'un des profilés conducteurs thermiques (3) et d'une latte de bois (2) fixée à celui-ci, ou d'une pluralité de lattes de bois (2) fixées à celui-ci et qui se succèdent dans la direction de l'extension longitudinale du profilé conducteur thermique (3), les unités adjacentes étant espacées les unes des autres, une largeur de fente (24) entre les lattes de bois (2) d'unités adjacentes, mesurée orthogonalement à la direction de l'extension longitudinale du profilé conducteur thermique (3), se situant dans une plage allant de 5 mm à 20 mm, de préférence de 9 mm à 15 mm.

9. Structure de plafond (1) selon l'une des revendications 1 à 8, **caractérisée en ce que** l'épaisseur (22) de la latte de bois (2) est comprise dans une plage allant de 10 mm à 20 mm, de préférence de 11 mm à 15 mm, et/ou **en ce que** la largeur (23) de la latte de bois (2) est comprise dans une plage allant de 30 mm à 90 mm.

10. Structure de plafond (1) selon l'une des revendications 1 à 9, **caractérisée en ce qu'**une face arrière (26) de la latte de bois (2) dirigée vers le profilé conducteur thermique (3) est placée, de préférence de manière plane, contre une surface d'appui (30) de l'aile de contact (16), et une face avant (27) de la latte de bois (2) opposée à la face arrière (26) est tournée vers le local.
